# EUROPEAN PATENT APPLICATION

(11) **EP 4 589 536 A1**
(43) Date of publication of application: **23.07.2025**
(21) Application number: 24175657.6
(22) Date of filing: 14.05.2024
(51) Int. Cl.: G06T 11/00, G06T 19/20

(54) **DENIM LAUNDRY EQUALIZER AND DIGITAL EDITING SYSTEM THEREOF**

(30) Priority: 18.01.2024 US 202418415992
(71) Applicant: Blueprint Studios Ltd, Kowloon (HK)
(72) Inventor: CHOW, Hnery, Kowloon (HK); ATKINS, Richard Edward, Kowloon (HK)
(74) Representative: Isern Patentes y Marcas S.L.

(57) **Abstract**

A denim laundry equalizer includes a user interface for receiving a editing command from users; a data input port for receiving an input data of the fabric; a data output port for outputting an output data of the fabric; a synchronization model for generating the output data of the fabric, based on the editing commands; wherein the output data is configured to form fabric visual effects matching the editing commands. The synchronization model allows for predictive modeling of denim fabric washing processes. This enables synchronization of the washing process formulations with a visualized digital model of the fabric, contributing to improved consistency, efficiency, and quality of the final product.

## Description

### TECHNICAL FIELD

The invention relates to digital information process, and in particular relates to a denim laundry equalizer and digital editing system thereof.

### BACKGROUND

Denim, also known as denim fabric or jeans fabric, is a sturdy and durable textile made from cotton fibers. It is renowned for its distinctive texture and unique appearance, and is widely used in the production of jeans and other casual garments.

Traditionally, denim is known for its deep blue hue, which is typically achieved through the use of indigo dye. This particular dyeing process gives denim its characteristic fading effect over time and with wear, adding to its unique charm.

In practical use and design of denim fabric, various washing processes are often employed to achieve specific aesthetic effects and styles to meet different design needs.

For example, specific enzyme solutions may be used to treat the fabric, resulting in slight creases and a softened effect (known as "enzyme wash"). Another technique involves washing the denim fabric with stones or similar materials in a washing machine to create a worn-in look (known as "stone wash"). Additionally, bleaching agents or chemical treatments may be used to produce brightening or fading effects on the denim fabric. However, these laundry processes require physical treatment of the material to determine the true visual effects and degree of the washing process. Consequently, this poses several disadvantages in the production and manufacturing of clothing fabrics. For instance, it leads to the need for excessive design samples, and increases the likelihood of human error during manual adjustments.

### SUMMARY

In first aspect, the present invention is provided a denim laundry equalizer. The denim laundry equalizer includes a user interface for receiving a editing command from users, a data input port for receiving an input data of the fabric; a data output port for outputting an output data of the fabric; a synchronization model for generating the output data of the fabric, based on the editing commands; wherein the output data is configured to form fabric visual effects matching the editing commands.

Optionally, the user interface comprises a plurality of adjustable sliders, with each slider configured to adjust parameters of at least one laundry process.

Optionally, the laundry process comprises an enzyme wash process, and the slider comprises an enzyme wash slider, which is configured to change the intensity of the enzyme wash process by moving the enzyme wash slider.

Optionally, the laundry process comprises a stone wash process, and the slider comprises a stone wash slider, which is configured to change the intensity of the stone wash process by moving the stone wash slider.

Optionally, the laundry process includes a bleaching process, and the slider comprises a bleaching slider, which is configured to change the intensity of the bleaching process by moving the bleaching slider.

Optionally, the laundry process comprises a dyeing process, and the slider comprises a tint slider, which is configured to change the intensity of the dyeing process by moving the tint slider.

Optionally, the slider further comprises at least one intensity slider, which is configured to change the overall intensity of the laundry process by moving the intensity slider. Optionally, the input data is three-dimensional data information obtained by scanning the denim fabric.

Optionally, the output data is a visualized denim fabric image with visual effects corresponding to the editing commands.

In second aspect, the present invention is further provided a digital editing system. The digital editing system includes: at least one 3D device configured to capture three-dimensional data information of denim fabric and visualize the three-dimensional data information of the denim fabric; the denim laundry equalizer described above, configured to edit the three-dimensional data information based on received editing commands.

At least one advantageous aspect of the present invention is that the synchronization model integrating artificial intelligence learning algorithms allows for predictive modeling of denim fabric washing processes. This enables synchronization of the washing process formulations with a visualized digital model of the fabric, contributing to improved consistency, efficiency, and quality of the final product.

### BRIEF DESCRIPTION OF THE DRAWINGS

One or more embodiments are described by way of example in conjunction with the accompanying drawings, which are not intended to limit the embodiments. Elements with the same reference numerals in the drawings represent similar components, unless otherwise specified. The drawings are not to scale.
FIG.1 illustrates a schematic diagram of a user interface of the equalizer according to an embodiment.
FIG.2 illustrates a schematic diagram of the color variations of denim fabric after different intensities of enzyme washing processing and bleaching processing.
FIG.3 illustrates a schematic diagram of 3D data of the denim fabric.
FIG.4 illustrates a schematic diagram of the digital editing system according to an embodiment.
FIG.5 illustrates a schematic diagram of the digital editing system according to another embodiment.
FIG.6 illustrates a schematic diagram of the equalizer according to an embodiment.

### DETAILED DESCRIPTION

To facilitate a better understanding of the present application, a more detailed description is provided below, in conjunction with the accompanying drawings and specific embodiments. It should be noted that when an element is described as "fixed to" another element, it can be directly on the other element, or there may be one or more intermediate elements between them. When an element is described as "connected" to another element, it can be directly connected to the other element, or there may be one or more intermediate elements between them. The positional terms used in this specification, such as "up," "down," "inside," "outside," "vertical," "horizontal," etc., are based on the orientation or positional relationship shown in the drawings for the purpose of describing and simplifying the present application, and should not be construed as limiting the devices or elements to a specific orientation, construction, or operation. Therefore, they should not be understood as limiting the present application.

Furthermore, terms such as "first," "second," etc., are used for descriptive purposes only and should not be construed as indicating or implying relative importance. Terms such as "comprising" or "including" imply the presence of the elements or objects listed before the term and do not exclude other elements or objects. The terms "connected" or "coupled" are not limited to physical or mechanical connections but can also include electrical connections, whether direct or indirect. Unless otherwise defined, features such as "parallel," "perpendicular," and "identical" used in the embodiments of the present application include strict cases of "parallel," "perpendicular," "identical," as well as cases with a certain margin of error, such as "substantially parallel," "substantially perpendicular," "substantially identical." For example, the term "substantially" may indicate a difference within 10% or within 5% of the average value of the objects being compared. When the quantity of a component or element is not specifically indicated in the subsequent description of the embodiments of the present application, it means that the component or element can be one or more, or at least one. "At least one" means one or more, and "multiple" means at least two.

Unless otherwise defined, all the technical and scientific terms used in this specification have the same meaning as understood by those skilled in the art to which the present application belongs. The terms used in this specification are only for the purpose of describing specific embodiments and are not intended to limit the present application. The term "and/or" as used herein includes any and all combinations of one or more of the associated listed items.

Furthermore, the technical features described in different embodiments of the present application can be combined with each other as long as they do not conflict. It is evident that the described embodiments are only a part of the embodiments of the present application, and not the entirety. All other embodiments that can be obtained by those skilled in the art without inventive labor based on the described embodiments of the present application are within the scope of protection of the present application.

The present application embodiment provides a digital platform, referred to as " denim laundry equalizer " that ensures consistency between the digital design process of garments (laundry) and the physical production process. It allows for a close integration of these two processes, ensuring that the final physical product accurately represents the original digital design.

The denim laundry equalizer offers a user-friendly interface. For example, users such as designers can adjust the specific visual effects of the fabric through sliders in the user interface, enabling desired outcomes in terms of color tone, brightness, and other visual aspects.

Upon receiving user editing operations, the denim laundry equalizer can automatically calculate the chemical and energy breakdown of the laundry process using built-in algorithms or artificial intelligence models, thereby predicting and presenting the corresponding visual effects of the fabric. The artificial intelligence model bridges the digital and physical technologies, recording and learning the mapping relationship between the washing process formulations and their corresponding effects, enabling the fabric simulator to predict visual effects.

As a result, the entire process is visualized through the denim laundry equalizer, eliminating the need for physical samples, reducing waste and production costs, and bridging the gap between digital laundry design and physical laundry processing in mass production.

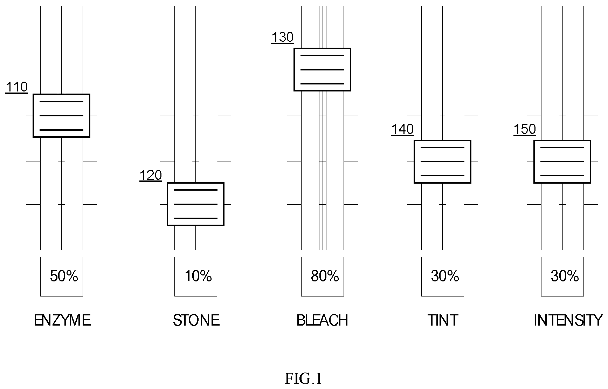

FIG.1 illustrates a schematic diagram of the user interface according to an embodiment. To fully describe the actual usage process of the present application, the following detailed explanation is provided in conjunction with FIG.1.

The user interface may include multiple different sliders that are used to adjust and control various parameters of the washing processes.

As shown in FIG.1, the aforementioned sliders may include: an enzyme wash slider 110, a stone wash slider 120, a bleach slider 130, a tint slider 140, and an intensity slider 150.

The enzyme wash slider 110 is configured to change the intensity of the enzyme wash process by moving the position of the slider. Specifically, enzyme wash process involves the use of enzyme to produce soft, comfort, luster and fade effect on denim fabric. The surface cellulose fibers of the denim fabric are broken down by enzymes and removes during washing. During enzyme washing,certain amount of indigo dye and cellulose fibers from the surface of the fabric are removed.

In an embodiment, the higher percentage on the enzyme wash slider 110, the more faded the colour tone will go and surface characteristics become more dominant.

The stone wash slider 120 is configured to change the intensity of the stone wash process by moving the position of the slider. Specifically, stone washing of denim fabric gives "used" or "vintage" look on the garments. This is due to the varying degree of abrasion in the garment. Traditionally, stone washing of denim garments is carried out with pumice stones to achieve a soft hand and desirable look.

In an embodiment, the higher the percentage on the stone wash slider 120, the more faded the color tone will go, surface characteristics become more dominant and high & low abrasion is increasing visually.

The bleach slider 130 is configured to change the intensity of the bleach process by moving the position of the slider. Specifically, Denim bleach is a method for removing indigo from denim that involves the addition of a heavy oxidative bleaching agent such as sodium hypochlorite (NaClO) or potassium permanganate (KMnO4) during the washing process, with or without the addition of stone. Depending on the intensity of the bleach liquor, the temperature, and the treatment period, the discoloration produced is normally more noticeable.

In an embodiment, the higher the percentage on the bleach slider 130, rapid fade to the colour tone, colour will be more optic bright overall and high & low abrasion is increasing visually.

The tint slider 140 is configured to change the intensity of the dyeing process by moving the position of the slider. Specifically, tinting of denim garments is usually done after the stone wash process. In this procedure, the garment is lightly colored to give the final denim appearance a slight shift. This is not true overdyeing but merely gives the impression of a change in the overall colour of the fabric.

In an embodiment, the higher the percentage on the tint slider 140, the stronger the colour tone.

The intensity slider 150 is configured to change the overall intensity of the washing process by moving the position of the slider. Specifically, the intensity slider 150 combines all the sliders together and locks the as one movement. The higher percentage on the intensity slider 150, the mover visual effects to the characteristics and fade of the jean.

In some implementation examples, "indigo" is a popular color in the textile industry, and many fabrics are dyed with indigo to achieve a deep and rich blue shade. Depending on the desired style, it is sometimes necessary to manipulate the color of indigo fabrics through one or more washing processes, such as enzyme washing or the addition of bleach, to create a faded or worn appearance or correct color variations.

In traditional methods, achieving the desired color manipulation requires significant time and manual material costs. However, the denim laundry equalizer according to the embodiment allows for the imitation of enzyme washing processes to create a faded appearance while maintaining the same hue as the original fabric. This process can be repeated multiple times until the desired color treatment level is achieved.

Furthermore, the denim laundry equalizer can also mimic the effects of bleach on the indigo shade and utilize specific algorithms to reflect these increments. For example, it can visually represent the color change increments caused by bleach, resulting in a consistent and predictable final color. This ensures that the final color remains within the desired range while preserving the quality and integrity of the fabric.

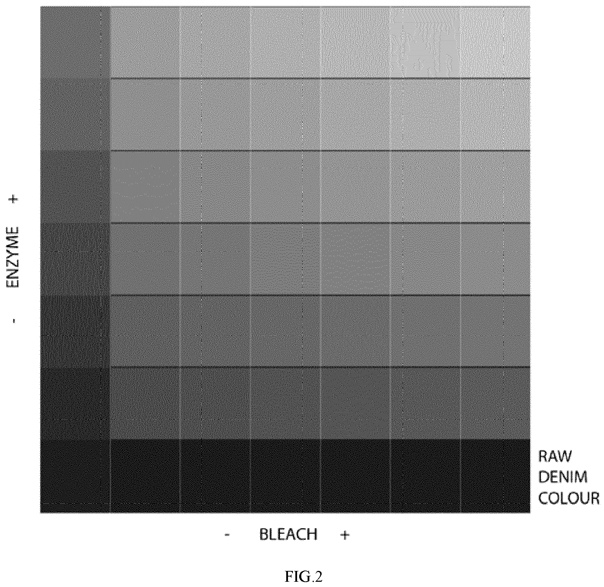

For example, as shown in FIG. 2, the denim laundry equalizer can provide the corresponding visual appearance colors of denim fabric after being treated with different intensities of enzyme washing and/or bleaching processes. These visual appearance colors exist in the form of numerical information and can be presented to users such as designers through display devices.

Thus, based on the intensities of various processes set by the user in the interactive interface shown in FIG.1, the corresponding visual effects of denim fabric can be displayed for the user, through FIG. 2 or a similar visual appearance color mapping table.

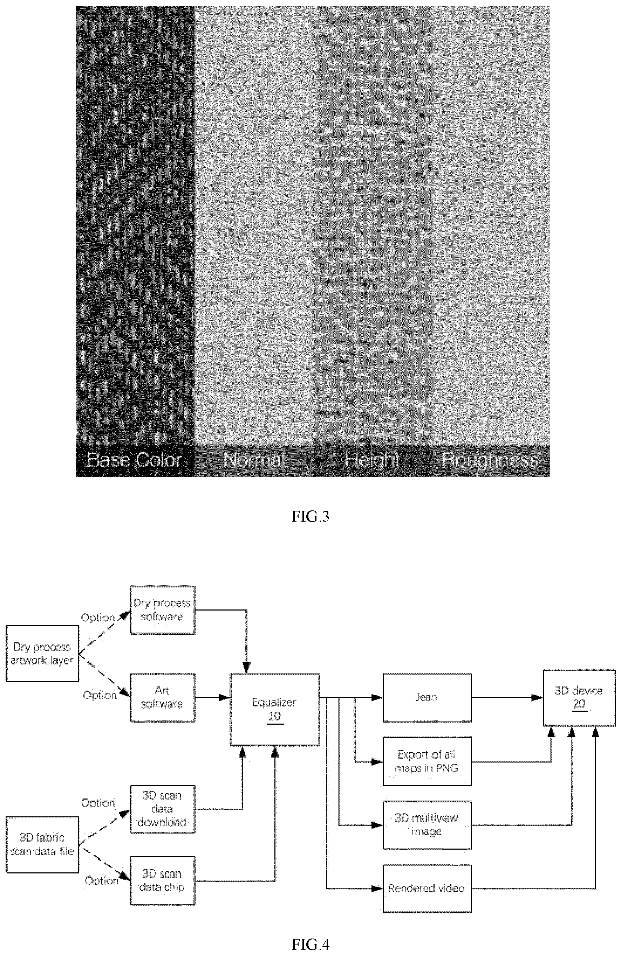

Specifically, the input data can be the three-dimensional data information obtained by scanning denim fabric. As shown in FIG. 3, the three-dimensional data may be a texture stack, which is consist of "Base color", "Normal", "Height" and "Roughness". The texture stack can be taken from a material scan that is present in the 3D image data file and allows multiple physical qualities to be extracted or manipulated when rendering.

Based on the digital equalizer according to the above embodiments, the present application further provides a digital editing system for denim. The digital editing system integrates the aforementioned equalizer and a three-dimensional (3D) device, allowing it to be combined with the actual denim fabric production process. This ensures that the use of washing processes is synchronized with the color and tone of denim fabric displayed on the screen, ensuring the final physical product matches the digital design. Specifically, The 3D device can be any suitable 3D software.

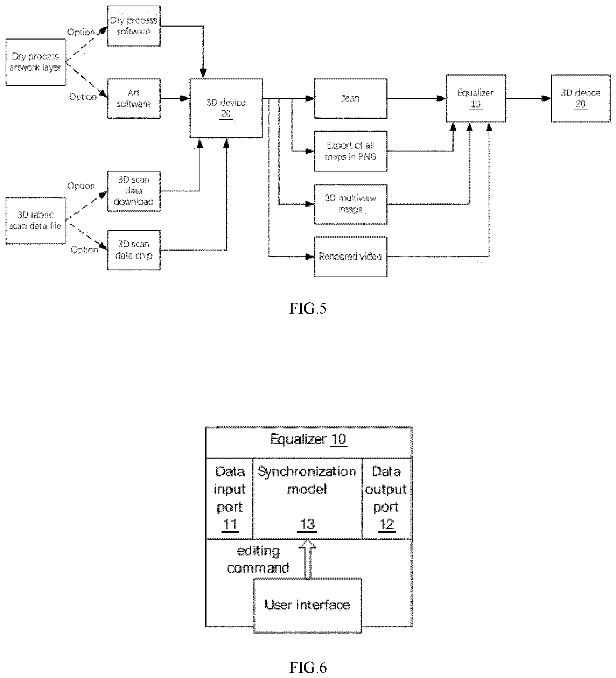

FIG.4 illustrates a schematic diagram of the digital editing system according to an embodiment, while FIG. 5 illustrates a schematic diagram of the digital editing system according to another embodiment.

As shown in FIG. 4, the data information can be initially provided to the equalizer 10. After editing by the equalizer 10, it can be further provided to the 3D device 20 for intuitive presentation or guidance in the actual production process.

As shown in FIG. 5, the data information can also be initially provided to the 3D device 20. After adjustment by the 3D device 20, it can be transmitted to the denim laundry equalizer 10 for editing. The edited data can be further provided back to the 3D device 20.

In an embodiment, as shown in FIG.6, the data input port and the output port of the equalizer 10 can be labeled as 11 and 12, respectively. The synchronization model labeled as 13 is internally configured to achieve synchronization between the visual changes and editing instructions. The number of the ports can be determined by the needs of the actual situation.

In an embodiment, the aforementioned data information can be downloaded three-dimensional data information or can be obtained through specific three-dimensional data collection chips. Furthermore, the data information also includes data about denim fabric from other simulation software. These data information can be obtained either before the washing process, as part of preceding processes, or after the design, forming the data information.

In summary, the digital equalizer bridges the gap between digital information and physical denim fabric washing processes. By synchronizing the washing formula with the digital image on the screen, it ensures the desired color and effects are achieved during the physical washing process. Therefore, the digital equalizer brings greater efficiency and sustainability advantages to the textile industry, resulting in the desired outcomes.

The digital equalizer can adopt the hue of indigo fabric and manipulate the color to match the fading tones achieved with enzyme washing in the laundry process. Furthermore, it can synchronize the distressing effect with the digital image on the screen, ensuring the desired level of wear and tear is achieved during the physical washing process. Additionally, it can mimic the effects of bleach on the indigo shade and calculate and reflect these increments using algorithms.

The digital configuration data may create a laundry recipe mirrored by a visual marker for approval on screen. The software in the digital equalizer then synchronises the digital data so it's identical to the information needed to make the jeans in reality in a factory anywhere in the world.

The above content provides further detailed explanations in conjunction with specific/preferred embodiments, but it should not be construed that the specific embodiments of the present application are limited to these explanations. Those skilled in the art can make various modifications and improvements within the scope of the present application without departing from the spirit of the present application.

## Claims

1. A denim laundry equalizer, comprising:
a user interface for receiving a editing command from users;
a data input port for receiving an input data of the fabric;
a data output port for outputting an output data of the fabric;
a synchronization model for generating the output data of the fabric, based on the editing commands;
wherein the output data is configured to form fabric visual effects matching the editing commands.

2. The denim laundry equalizer according to claim 1, wherein the user interface comprises a plurality of adjustable sliders, with each slider configured to adjust parameters of at least one laundry process.

3. The denim laundry equalizer according to claim 2, wherein the laundry process comprises an enzyme wash process, and the slider comprises an enzyme wash slider, which is configured to change the intensity of the enzyme wash process by moving the enzyme wash slider.

4. The denim laundry equalizer according to claim 2, wherein the laundry process comprises a stone wash process, and the slider comprises a stone wash slider, which is configured to change the intensity of the stone wash process by moving the stone wash slider.

5. The denim laundry equalizer according to claim 2, wherein the laundry process includes a bleaching process, and the slider comprises a bleaching slider, which is configured to change the intensity of the bleaching process by moving the bleaching slider.

6. The denim laundry equalizer according to claim 2, wherein the laundry process comprises a dyeing process, and the slider comprises a tint slider, which is configured to change the intensity of the dyeing process by moving the tint slider.

7. The denim laundry equalizer according to claim 2, wherein the slider further comprises at least one intensity slider, which is configured to change the overall intensity of the laundry process by moving the intensity slider.

8. The denim laundry equalizer according to claim 1, wherein the input data is three-dimensional data information obtained by scanning the denim fabric.

9. The denim laundry equalizer according to claim 1, wherein the output data is a visualized denim fabric image with visual effects corresponding to the editing commands.

10. A digital editing system comprising:
at least one 3D device configured to capture three-dimensional data information of denim fabric and visualize the three-dimensional data information of the denim fabric; the denim laundry equalizer according to claim 1, configured to edit the three-dimensional data information based on received editing commands.

11. The digital editing system according to claim 10, wherein the denim laundry equalizer is further configured to store at least one edited three-dimensional data information for visual presentation of the editing commands.

12. The digital editing system according to claim 10, wherein the denim laundry equalizer is further configured to generate a digital configuration data, which is used to create a laundry recipe mirrored by a visual marker for approval on screen.

13. The digital editing system according to claim 12, wherein the denim laundry equalizer is further configured to synchronise the digital configuration data, so that it's identical to the information needed to make jeans in reality in a factory anywhere in the world.

## Amended claims

### Amended claims in accordance with Rule 137(2) EPC.

1. A denim laundry wear parameter editing digital platform for laundry processes, comprising:
a user interface for receiving an editing command from users;
a data input port for receiving an input data of the fabric;
a data output port for outputting an output data of the fabric;
a synchronization model for generating the output data of the fabric, based on the editing commands;
wherein the output data is configured to form fabric visual effects matching the editing commands.

2. The denim laundry wear parameter editing digital platform for laundry processes according to claim 1, wherein the user interface comprises a plurality of adjustable sliders, with each slider configured to adjust parameters of at least one laundry process.

3. The denim laundry wear parameter editing digital platform for laundry processes according to claim 2, wherein the laundry process comprises an enzyme wash process, and the slider comprises an enzyme wash slider, which is configured to change the intensity of the enzyme wash process by moving the enzyme wash slider.

4. The denim laundry wear parameter editing digital platform for laundry processes according to any one of claims 2 or 3, wherein the laundry process comprises a stone wash process, and the slider comprises a stone wash slider, which is configured to change the intensity of the stone wash process by moving the stone wash slider.

5. The denim laundry wear parameter editing digital platform for laundry processes according to any one of claims 2 to 4, wherein the laundry process includes a bleaching process, and the slider comprises a bleaching slider, which is configured to change the intensity of the bleaching process by moving the bleaching slider.

6. The denim laundry wear parameter editing digital platform for laundry processes according to any one of claims 2 to 5, wherein the laundry process comprises a dyeing process, and the slider comprises a tint slider, which is configured to change the intensity of the dyeing process by moving the tint slider.

7. The denim laundry wear parameter editing digital platform for laundry processes according to any one of claims 2 to 6, wherein the slider further comprises at least one intensity slider, which is configured to change the overall intensity of the laundry process by moving the intensity slider.

8. The denim laundry wear parameter editing digital platform for laundry processes according to any one of the preceding claims, wherein the input data is three-dimensional data information obtained by scanning the denim fabric.

9. The denim laundry wear parameter editing digital platform for laundry processes according to any one of the preceding claims, wherein the output data is a visualized denim fabric image with visual effects corresponding to the editing commands.

10. A digital editing system comprising:
at least one 3D device configured to capture three-dimensional data information of denim fabric and visualize the three-dimensional data information of the denim fabric; the denim laundry wear parameter editing digital platform for laundry processes according to any one of the preceding claims, configured to edit the three-dimensional data information based on received editing commands.

11. The digital editing system according to claim 10, wherein the denim laundry wear parameter editing digital platform for laundry processes is further configured to store at least one edited three-dimensional data information for visual presentation of the editing commands.

12. The digital editing system according to any one of claims 10 or 11, wherein the denim laundry wear parameter editing digital platform for laundry processes is further configured to generate a digital configuration data, which is used to create a laundry recipe mirrored by a visual marker for approval on screen.

13. The digital editing system according to claim 12, wherein the denim laundry wear parameter editing digital platform for laundry processes is further configured to synchronise the digital configuration data, so that it's identical to the information needed to make jeans in reality in a factory anywhere in the world.
